# EUROPEAN PATENT APPLICATION

(11) **EP 3 974 640 A1**
(43) Date of publication of application: **30.03.2022**
(21) Application number: 20810351.5
(22) Date of filing: 22.05.2020
(51) Int. Cl.: F02D 45/00, B60K 35/00, B63B 49/00, B63H 3/00, B63H 21/21, F02D 29/02

(54) **SHIP MAIN ENGINE MONITORING METHOD, MAIN ENGINE MONITORING SYSTEM, MAIN ENGINE STATE PREDICTION SYSTEM, AND OPERATION STATUS PREDICTION SYSTEM**

(30) Priority: 22.05.2019 JP 2019095768
(71) Applicant: National Institute of Maritime, Port and Aviation Technology, Tokyo 181-0004 (JP); Nabtesco Corporation, Tokyo 102-0093 (JP)
(72) Inventor: KITAGAWA Yasushi, Mitaka-shi, Tokyo 181-0004 (JP); BONDARENKO Oleksiy, Mitaka-shi, Tokyo 181-0004 (JP); FUKUDA Tetsugo, Mitaka-shi, Tokyo 181-0004 (JP); IDEGUCHI Makoto, Kobe-shi, Hyogo 651-2413 (JP); FUJIWARA Makoto, Kobe-shi, Hyogo 651-2413 (JP)
(74) Representative: Körfer, Thomas
(86) International application number: PCT/JP2020/020425
(87) International publication number: WO 2020/235688

(57) **Abstract**

It is an object of the present invention to provide a main engine monitoring method, a main engine monitoring system, a main engine state prediction system and an operation status prediction system of a ship capable of monitoring a main engine state with precision comparable to actual measurements without requiring an actual measurement device so much. A set value and a major measurement value related to operation of a main engine 10 which is a main engine state parameter as an intra-model variable are applied to a main engine virtual model 40 made of a combination of physical models each representing a response per a constituent element of the main engine 10 of the ship A, calculation is carried out by the main engine virtual model 40 and a main engine state of the main engine 10 is monitored, a model parameter as the intra-model variable is changed using at least one of the main engine state parameter and the main engine state as a calculation result, and the main engine virtual model 40 is updated.

## Description

### [TECHNICAL FIELD]

The present invention relates to a main engine monitoring method, a main engine monitoring system, a main engine state prediction system and an operation status prediction system of a ship using a main engine virtual model.

### [BACKGROUND TECHNIQUE]

It is expected that as EEDI (energy efficiency design index) regulation is introduced by international maritime organization (IMO) as a functional requirement of a ship, downsizing of a main engine mounted in the ship to satisfy this regulation is proceeded in the future. Guidelines concerning minimum propulsion output expertise in main engine output which should be held at a minimum to travel under stormy weather while keeping safety is discussed by the IMO, and it is contemplated that the concerns associated with downsizing of the main engine and safe ship-operation become future parts of the debate.

Among such future predictions, it is contemplated that importance to perform maintenance at an appropriate time while monitoring the operation condition of the main engine is further increased. To predict ship speed determined by the operation condition and propulsion output of the main engine under weather and maritime weather to be encountered is important because this expectation is connected with safe ship-operation and energy saving efficient ship-operation of the ship.

Here, to manage the maintenance of the main engine, it is important that the main engine state can be monitored. For this purpose, it is desirable that items as much as possible can be measured. On the other hand, the number of items in main engine states to be monitored in general merchant ships is suppressed to the minimum necessary in many cases in terms of costs. Therefore, it can be said that maintenance management is also limited, and if a main engine which is predicted that downsizing thereof is proceeded in the future is assumed, maintenance managing technique should be enhanced.

Here, patent document 1 discloses an engine plant operation management assisting system. According to this assisting system, a main engine plant for a ship is provided with an arithmetic device, a data input device, a storage device and a display device, data from an instrument of the main engine can directly be input to the input device, sample data which is sample by the main engine and data which is sampled from outside can be input to the input device, diagnosis database, performance data, an arithmetic equation for calculating performance information and combustion information of the main engine using data which is input from the input device, and maintenance management database are stored in the storage device, the arithmetic device calculates the performance information and combustion information of the main engine, information of items which are necessary to search failure source, and information of need of maintenance of essential parts which are necessary for maintenance management, the information can be selected by the outside operation and can be displayed on the display device, abnormality presumed cause and trouble avoiding means are displayed are displayed on the display device, and presumed causes and presumed maintenance necessary locations are displayed on the display device in descending order of priority.

Patent document 2 discloses an engine control method for controlling an engine having an exhaust valve and a fuel adjustment means using an engine state observer which predict an engine state by an engine model, at least the engine speed is detected, it is input to the engine state observer, at least air excess coefficient is predicted as the engine state by the engine state observer, and at least the exhaust valve is controlled as a control target based on the predicted air excess coefficient.

patent document 3 discloses that in a method for diagnosing an engine using computer-utilizing model, a modeling value of first operation characteristics and a modeling value of second operation characteristics are determined using a first set parameter and a second set parameter of the detected engine, and these modeling values are compared with actual values and the engine is diagnosed.

Patent document 4 discloses an operation state display device for a ship including a main engine, a variable pitch propeller driven by the main engine, engine speed detecting means for detecting the main engine speed, main engine output calculating means for calculating output of the main engine, pitch angle detecting means for detecting a pitch angle of the variable pitch propeller, ship speed detecting means for detecting ship seed of the ship, and display means for displaying, as a characteristic diagram, a relation between speed characteristics of the main engine, output characteristics of the main engine, pitch angle characteristics of the variable pitch propeller, and ship speed of the ship, and a relation between the main engine speed detected by the engine speed detecting means, output of the main engine calculated by the main engine output calculating means, a pitch angle of the variable pitch propeller detected by the pitch angle detecting means, and the ship speed detected by the ship speed detecting means is displayed on the characteristic diagram display means as a current operation state.

### [PRIOR ART DOCUMENT]

### [PATENT DOCUMENT]

[Patent Document 1] Japanese Patent Application Laid-open No.H7-248816
[Patent Document 2] Japanese Patent Application Laid-open No.2019-19783
[Patent Document 3] Japanese Translation of PCT International Application, Publication No.H6-504348
[Patent Document 4] Japanese Patent Application Laid-open No.2014-198515

### [SUMMARY OF THE INVENTION]

### [PROBLEM TO BE SOLVED BY THE INVENTION]

Any of patent documents 1 to 4 does not monitor a main engine state using a main engine virtual model made from a combination of physical models representing responses of constituent elements of the main engine, or does not update the main engine virtual model.

Hence, it is an object of the present invention to provide a main engine monitoring method, a main engine monitoring system, a main engine state prediction system and an operation status prediction system of a ship capable of monitoring a main engine state with precision comparable to actual measurements without requiring actual measurement device so much.

### [MEANS FOR SOLVING THE PROBLEM]

In a main engine monitoring method of a ship corresponding to claim 1, a set value and a major measurement value related to operation of a main engine which is a main engine state parameter as an intra-model variable are applied to a main engine virtual model made of a combination of physical models each representing a response per a constituent element of a main engine of the ship, calculation is carried out by the main engine virtual model and a main engine state of the main engine is monitored, a model parameter as the intra-model variable is changed using at least one of the main engine state parameter and the main engine state as a calculation result, and the main engine virtual model is updated.

According to the present invention described in claim 1, by calculating the main engine state using the main engine virtual model composed of a physical model base, the main engine state corresponding to the ship operation status can be obtained as a variable at the time of calculation. Therefore, it is possible to monitor the main engine state based on a calculation result without requiring the actual measurement device so much. Further, by successively changing the model parameter as the intra-model variable to update the engine virtual model and by keeping the prediction precision always in a high state, it is possible to monitor the main engine state with precision comparable to actual measurements.

In the invention described in claim 2, command speed of the main engine is used as the set value related to the operation of the actual main engine, and the main engine speed and a fuel supply amount are used as the major measurement value.

According to the invention described in claim 2, it is possible to enhance the prediction precision of the main engine virtual model, and to monitor the main engine state more appropriately.

In the invention described in claim 3, the main engine state which carries out calculation by the main engine virtual model includes at least one of main engine output (horsepower), a fuel consumption amount, turbocharger rotation speed, pressure in a cylinder, scavenging pressure, scavenging temperature, exhaust pressure, exhaust temperature, an intake air amount, an air excess coefficient and main engine torque.

According to the invention described in claim 3, it is possible to more appropriately grasp the main engine state required for monitoring the main engine.

In the invention described in claim 4, at least one of a temporal average value, variable amplitude and an average period of the main engine state is evaluated, and the monitoring is carried out.

According to the invention described in claim 4, it becomes easy to more appropriately check whether the main engine is safely operated.

In the invention described in claim 5, the main engine state in the real sea area or an operation status of the ship is predicted using a propeller model which models a propeller driven by the main engine and a ship's body model of the ship which is propelled by a propeller.

According to the invention described in claim 5, it is possible to predict an actual main engine state and an operation status of a ship in a real sea area, and to contribute to a safe ship-operation and energy saving ship-operation of the ship.

In the invention described in claim 6, the main engine state for monitoring is displayed on at least one of an engine room, a bridge, a captain's cabin of the ship and an overland management company.

According to the invention described in claim 6, it is possible to monitor at respective locations where a main engine state is displayed, and it is possible to utilize in accordance with a purpose, for example, the safe ship-operation is determined, and future ship speed or a main engine state is predicted.

Here, the main engine state to be monitored includes, in addition to the main engine state as a result of calculation by the main engine virtual model, a secondary calculation result based on the main engine state as a result, related information for calculating the main engine state, and determination information of a person based on the main engine state as a result.

In the invention described in claim 7, display of the main engine state for monitoring displays at least one of first monitoring display of the main engine state by the main engine virtual model which does not change the model parameter, second monitoring display of the main engine state by the main engine virtual model which changes and updates the model parameter, and display of a value at time of maximum continuous rating (MCR) of the main engine.

According to the invention described in claim 7, by displaying the first monitoring display, the second monitoring display, or the value display at the time of the maximum continuous rating (MCR) state of the main engine in accordance with a purpose, it becomes easy to plan a schedule a safe ship-operation or an energy saving ship-operation of a ship. For example, the first monitoring display can be made as a main engine state of initial service of the ship, and the second monitoring display can be made as a main engine state after years are elapsed from the initial service. In this case, by displaying both the first monitoring display and the second monitoring display, it becomes easy to grasp influence of age deterioration.

In the invention described in claim 8, at least one of a plurality of the main engine state parameters can be displayed by selection.

According to the invention described in claim 8, by displaying the main engine state parameter together with the main engine state, when the monitoring is carried out, it becomes easy to refer also to a major measurement value and a set value related to an operation of the main engine used for calculation made by the main engine virtual model.

The invention described in claim 9 provides a main engine monitoring system of a ship including: a main engine of the ship; operation setting means for setting a set value related to operation of the main engine; measuring means for obtaining a major measurement value of the main engine; a main engine virtual model made of a combination of physical models each representing a response per a constituent element of the main engine; calculating means for applying the set value and the measurement value which are main engine state parameters as intra-model variables to the main engine virtual model, and for calculating a main engine state; monitoring means for monitoring the main engine state based on a result of the calculation of the calculating means; and intra-model variable updating means for changing a model parameter as the intra-model variable using at least one of the main engine state parameter and the main engine state as the result of the calculation, and for updating the main engine virtual model.

According to the invention described in claim 9, by calculating the main engine state using the main engine virtual model composed of a physical model base, the main engine state corresponding to the ship operation status can be obtained as a variable at the time of calculation. Therefore, it is possible to monitor the main engine state based on a calculation result without requiring the actual measurement device so much. Further, by successively changing the model parameter and always keeping the prediction precision of the main engine virtual model in the high state, it is possible to monitor with precision comparable to actual measurements.

In the invention described in claim 10, the set value related to the operation which is set by the operation setting means is command speed of the main engine, and the major measurement value which is measured by the measuring means is the main engine speed and a fuel supply amount.

According to the invention described in claim 10, it is possible to enhance the prediction precision of the main engine virtual model, and to monitor the main engine state more appropriately.

In the invention described in claim 11, the calculating means calculates, using the main engine virtual model at least one of main engine output (horsepower), a fuel consumption amount, turbocharger rotation speed , pressure in a cylinder, scavenging pressure, scavenging temperature, exhaust pressure, exhaust temperature, an intake air amount, an air excess coefficient and main engine torque as the main engine state.

According to the invention described in claim 11, it is possible to more appropriately grasp the main engine state required for monitoring the main engine.

In the invention described in claim 12, the main engine monitoring system of a ship further including statistical processing means for evaluating at least one of temporal average value, variable amplitude and an average period of the main engine state, and for carrying out the monitoring.

According to the invention described in claim 12, it becomes easy to more appropriately check whether the main engine is safely operated.

In the invention described in claim 13, at least one of an engine room, a bridge, a captain's cabin of the ship, and a an overland management company includes display means which displays the main engine state as the monitoring means.

According to the invention described in claim 13, it is possible to monitor at respective locations where the display means is provided, and to utilize in accordance with a purpose such as determination whether the ship-operation is safe.

In the invention described in claim 14, the main engine monitoring system of a ship further including display processing means which processes, for displaying the main engine state on the display means, at least one of first monitoring display of the main engine state by the main engine virtual model which does not change the model parameter, second monitoring display of the main engine state by the main engine virtual model which changes and updates the model parameter, and display of a value at the time of maximum continuous rating (MCR) of the main engine.

According to the invention described in claim 14, by displaying the first monitoring display, the second monitoring display, or the value display at the time of the maximum continuous rating (MCR) state of the main engine in accordance with a purpose, it becomes easy to plan a schedule a safe ship-operation or an energy saving ship-operation of the ship. For example, the first monitoring display can be made as a main engine state of initial service of the ship, and the second monitoring display can be made as a main engine state after years are elapsed from the initial service. In this case, by displaying both the first monitoring display and the second monitoring display, it becomes easy to grasp influence of age deterioration.

In the invention described in claim 15, the display means includes display selecting means for selecting display of the set value related to the operation of the main engine and display of the major measurement value.

According to the invention described in claim 15, when it is selected to display a set value related to an operation of the main engine or an major measurement value together with the main engine state, it becomes easy to refer also to a value used for calculation carried out by the main engine virtual model when monitoring is carried out.

In a main engine state prediction system of a ship described in claim 16, the main engine monitoring system of a ship further includes a propeller model which models a propeller driven by the main engine, a ship's body model of the ship propelled by the propeller, and ship-operation condition input means of the ship in a real sea area, and the main engine state in the real sea area is predicted.

According to the invention described in claim 16, it is possible to precisely predict the main engine state in the real sea area, and to contribute to a safe ship-operation and energy saving ship-operation of the ship.

In an operation status prediction system of a ship described in claim 17, the main engine monitoring system of a ship further includes a propeller model which models a propeller driven by the main engine, a ship's body model of the ship propelled by the propeller, and ship-operation condition input means of the ship in a real sea area, and operation status calculating means of the ship, and operation status of the ship in the real sea area is predicted.

According to the invention described in claim 17, it is possible to precisely predict operation status in the real sea area, and to contribute to a safe ship-operation and energy saving ship-operation of the ship.

### [EFFECT OF THE INVENTION]

According to the main engine monitoring method of a ship of the present invention, by calculating the main engine state using the main engine virtual model composed of a physical model base, the main engine state corresponding to the ship operation status can be obtained as a variable at the time of calculation. Therefore, it is possible to monitor the main engine state based on the calculation result without requiring the actual measurement device so much. Further, by successively changing a model parameter as the intra-model variable to update the main engine virtual model and by keeping the prediction precision always in the high state, it is possible to monitor the main engine state with precision comparable to actual measurements.

When the command speed of the main engine is used as a set value related to the operation of the actual main engine, and the main engine speed and a fuel supply amount are used as a major measurement value, it is possible to enhance the prediction precision of the main engine virtual model, and to monitor the main engine state more appropriately.

When the main engine state which carries out calculation by the main engine virtual model includes at least one of main engine output (horsepower), a fuel consumption amount, turbocharger rotation speed , pressure in a cylinder, scavenging pressure, scavenging temperature, exhaust pressure, exhaust temperature, an intake air amount, an air excess coefficient and main engine torque, it is possible to more appropriately grasp the main engine state required for monitoring the main engine.

When at least one of a temporal average value, variable amplitude and an average period of the main engine state is evaluated, and the monitoring is carried out, it becomes easy to more appropriately check whether the main engine is safely operated.

When the main engine state in the real sea area or an operation status of the ship is predicted using a propeller model which models a propeller driven by the main engine and a ship's body model of the ship which is propelled by a propeller, it is possible to predict the actual main engine state and an operation status of the ship in the real sea area, and to contribute to the safe ship-operation or the energy saving ship-operation of the ship.

When the main engine state for monitoring is displayed on at least one of an engine room, a bridge, a captain's cabin of the ship and a an overland management company, it is possible to monitor at respective locations where a main engine state is displayed, and it is possible to utilize in accordance with a purpose, for example, the safe ship-operation is determined, and future ship speed or a main engine state is predicted.

When display of the main engine state for monitoring displays at least one of first monitoring display of the main engine state by the main engine virtual model which does not change the model parameter, second monitoring display of the main engine state by the main engine virtual model which changes and updates the model parameter, and display of a value at time of maximum continuous rating (MCR) of the main engine.by displaying the first monitoring display, the second monitoring display, or the value display at the time of the maximum continuous rating (MCR) state of the main engine in accordance with a purpose, it becomes easy to plan a schedule a safe ship-operation or an energy saving ship-operation of a ship. For example, the first monitoring display can be made as a main engine state of initial service of the ship, and the second monitoring display can be made as a main engine state after years are elapsed from the initial service. In this case, by displaying both the first monitoring display and the second monitoring display, it becomes easy to grasp influence of age deterioration.

When at least one of a plurality of the main engine state parameters can be displayed by selection, by displaying the main engine state parameter together with the main engine state, when the monitoring is carried out, it becomes easy to refer also to a major measurement value and a set value related to an operation of the main engine used for calculation made by the main engine virtual model.

According to the main engine monitoring system of a ship of the present invention, by calculating the main engine state using the main engine virtual model composed of a physical model base, the main engine state corresponding to the ship operation status can be obtained as a variable at the time of calculation. Therefore, it is possible to monitor the main engine state based on the calculation result without requiring the actual measurement device so much. Further, by successively changing the model parameter and always keeping the prediction precision of the main engine virtual model in the high state, it is possible to monitor with precision comparable to actual measurements.

When the set value related to the operation which is set by the operation setting means is command speed of the main engine, and the major measurement value which is measured by the measuring means is the main engine speed and a fuel supply amount, it is possible to enhance the prediction precision of the main engine virtual model, and to monitor the main engine state more appropriately.

When the calculating means calculates, using the main engine virtual model at least one of main engine output (horsepower), a fuel consumption amount, turbocharger rotation speed, pressure in a cylinder, scavenging pressure, scavenging temperature, exhaust pressure, exhaust temperature, an intake air amount, an air excess coefficient and main engine torque as the main engine state, it is possible to more appropriately grasp the main engine state required for monitoring the main engine.

When the main engine monitoring system of a ship further includes statistical processing means for evaluating at least one of temporal average value, variable amplitude and an average period of the main engine state, and for carrying out the monitoring, it becomes easy to more appropriately check whether the main engine is safely operated.

When at least one of an engine room, a bridge, a captain's cabin of the ship, and an overland management company includes display means which displays the main engine state as the monitoring means, it is possible to monitor at respective locations where the display means is provided, and to utilize in accordance with a purpose such as determination whether the ship-operation is safe.

When the main engine monitoring system of a ship further includes display processing means which processes, for displaying the main engine state on the display means, at least one of first monitoring display of the main engine state by the main engine virtual model which does not change the model parameter, second monitoring display of the main engine state by the main engine virtual model which changes and updates the model parameter, and display of a value at the time of maximum continuous rating (MCR) of the main engine, by displaying the first monitoring display, the second monitoring display, or the value display at the time of the maximum continuous rating (MCR) state of the main engine in accordance with a purpose, it becomes easy to plan a schedule a safe ship-operation or an energy saving ship-operation of the ship. For example, the first monitoring display can be made as a main engine state of initial service of the ship, and the second monitoring display can be made as a main engine state after years are elapsed from the initial service. In this case, by displaying both the first monitoring display and the second monitoring display, it becomes easy to grasp influence of age deterioration.

When the display means includes display selecting means for selecting display of the set value related to the operation of the main engine and display of the major measurement value, when it is selected to display a set value related to an operation of the main engine or a major measurement value together with the main engine state, it becomes easy to refer also to a value used for calculation carried out by the main engine virtual model when monitoring is carried out.

According to a main engine state prediction system of a ship of the invention, it is possible to precisely predict the main engine state in the real sea area, and to contribute to a safe ship-operation and energy saving ship-operation of the ship.

According to an operation status prediction system of a ship of the invention, it is possible to precisely predict operation status in the real sea area, and to contribute to a safe ship-operation and energy saving ship-operation of the ship.

### [BRIEF DESCRIPTION OF THE DRAWINGS]

Fig. 1 is a block diagram of a main engine monitoring system of a ship according to an embodiment of the present invention;
Fig. 2 is a conceptual diagram of a main engine virtual model;
Fig. 3 is a variable relation diagram of a physical model of the main engine virtual model;
Fig. 4 is a diagram showing a display example of a statistical analysis result using statistical processing means;
Fig. 5 is a conceptual diagram of a main engine state prediction system of the ship;
Fig. 6 is a conceptual diagram of an operation status prediction system of the ship;
Fig. 7 is a usage image diagram of the main engine monitoring system and the operation status prediction system of the ship;
Fig. 8 is a flowchart of the main engine monitoring system of the ship; and
Fig. 9 is a flowchart of the operation condition prediction system of the ship.

### [MODE FOR CARRYING OUT THE INVENTION]

A main engine monitoring method, a main engine monitoring system, a main engine state prediction system and an operation status prediction system of a ship according to an embodiment of the present invention will be described below.

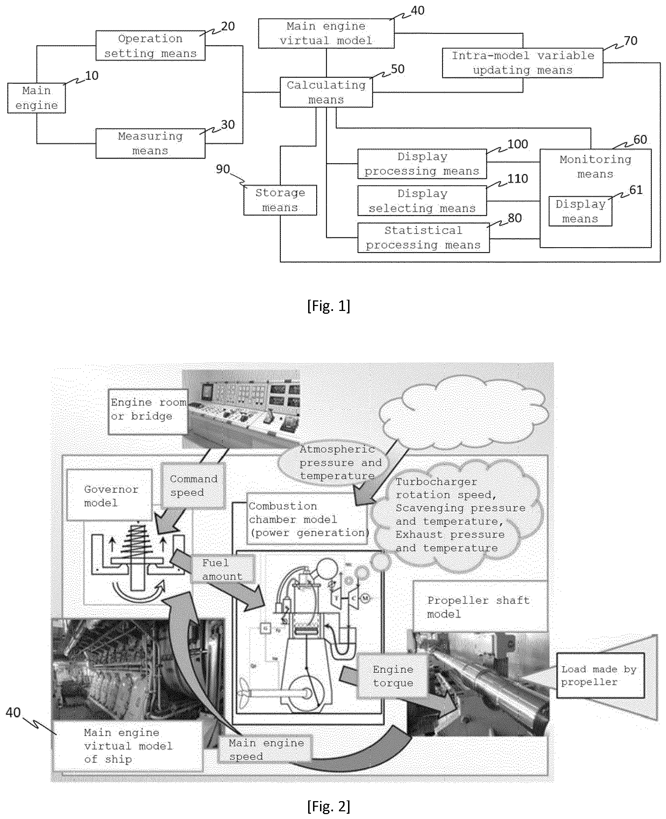

Fig. 1 is a block diagram of a main engine monitoring system of a ship according to the embodiment.

The main engine monitoring system of a ship includes a main engine 10 of the ship, operation setting means 20 for setting a set value related to operation of the main engine 10, measuring means 30 for obtaining major measurement value of the main engine 10, a main engine virtual model 40 composed of a combination of physical models representing responses of constituent elements of the main engine 10, calculating means 50 for applying the set value and the measurement value to the intra-model variable of the main engine virtual model 40 as a main engine state parameter, and for calculating the main engine state, monitoring means 60 for monitoring the main engine state based on the calculation result of the calculating means 50, intra-model variable updating means 70 for changing a model parameter as the intra-model variable using at least one of the main engine state parameter and the main engine state as a calculation result, statistical processing means 80 for evaluating at least one of a temporal average value, variable amplitude and average period of the main engine state, and for carrying out monitoring, storage means 90 for storing a calculation result of the calculating means 50 in chronological order, display processing means 100, and display selecting means 110.

As the physical models, there are a physical mathematics model which mathematically represents a state of the constituent element of the main engine 10, a mechanical learning (ML) model, a non-linear regression (NLR) model, a transfer function (TF) model, etc. Here, the physical mathematics model can religiously reproduce the main engine 10 if there is data for creating a model. The mechanical learning (ML) model is slightly complicated in configuration, but if measurement precision of the measuring means 30 is sufficient and there is data for creating a model, the mechanical learning model is loyal to the main engine 10. The non-linear regression (NLR) model is simple in configuration, but its precision is slightly poor even if there are many measurement values measured by the measuring means 30. The transfer function (TF) model is simple in configuration, but this model is sufficient in some cases depending upon a constituent element of the main engine 10 (e.g., cooler or the like). These models have merits and demerits, and it is preferable that these models are used in accordance with data items and amounts which can be obtained.

As the physical model, it is possible to use one kind of the plurality of kinds of models, or to use a combination of the plurality of models.

Here, an example in which the physical model is composed of only a physical mathematics model of a diesel main engine for a ship will be described as a representative example.

First, a governor model for adjusting the main engine speed will be described. The governor is determined in accordance with control setting whose fuel input amount for generating torque of the main engine is determined. If a mechanical governor is a target, the governor model is a model represented by time constant reflected by control setting or a primary differential equation including a proportional gain coefficient in many cases, and in the case of electron governor, the governor model is a model which conforms to PID control rules. The main engine torque generation model is modeled on generation of main engine torque caused by fuel combustion, a fuel input amount which is output from the governor model, the main engine speed, and a turbocharger rotation speed become variables, and it is general that the main engine torque generation model becomes a model from which generated power torque and friction of a rotational system are subtracted. When the turbocharger rotation speed is not measured, the value is calculated by a turbocharger rotation speed model. This model is obtained, in many cases, by a rotational motion differential equation in which turbine torque and compressor torque are external force terms, and to calculate turbine torque and compressor torque, calculation of a characteristic equation in which scavenging and exhaust gas are taken into consideration is carried out. As these calculations, there are a calculation method in which a combustion problem is individually handled for each of cylinders, and a calculation method in which combustion problems of all of the cylinders are handled while employing an average value of one rotation cycle as a representative. A response model of main engine speed is evaluated by a rotational motion differential equation of the rotational system in which external force load torque such as main engine torque and propeller torque are handled as external force terms.
When a physical model of the diesel main engine for a ship is composed of a physical mathematics model, the above-described configurations are common.

The main engine 10 is, for example a diesel main engine for a ship. To appropriately manage the maintenance of the main engine 10, it is necessary to monitor the main engine state, but when attempt is made to install many actual measurement devices, there is a problem of cost related to installation of the actual measurement environment, and there exists items which are difficult to be measured using the actual measurement device such as air excess coefficient in the main engine combustion chamber and cylinder internal pressure.

On the other hand, according to the main engine monitoring system of a ship of the embodiment, the main engine state is calculated using the main engine virtual model 40 composed of the physical model base. According to this, since the main engine state in accordance with the ship operation status is obtained as a variable at the time of calculation, it is possible to monitor the main engine state based on the calculation result without requiring the actual measurement device so much.

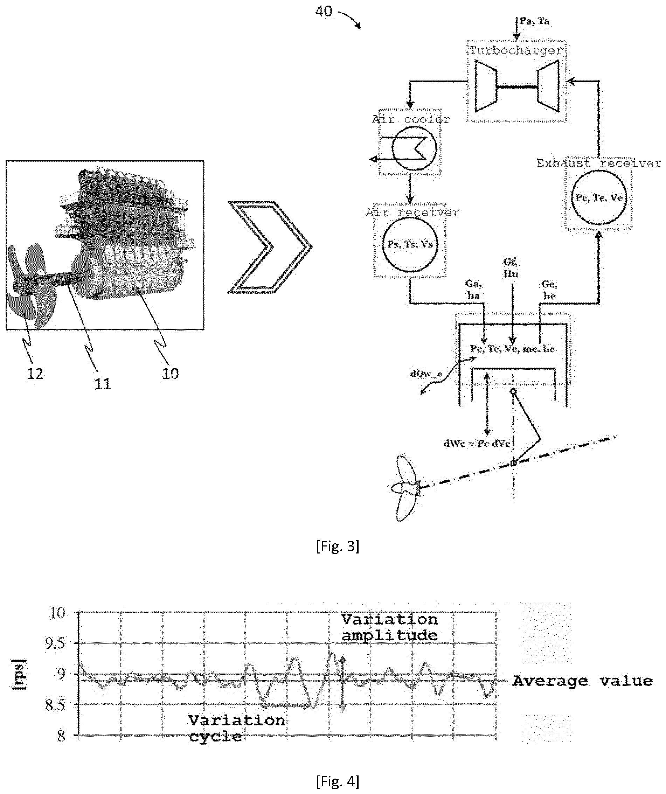

Here, Fig. 2 is a conceptual diagram of the main engine virtual model, and Fig. 3 is a variable relation diagram of the physical model of the main engine virtual model.

The main engine virtual model 40 is composed of a combination of physical models representing characteristics of constituent elements of the main engine such as a governor model and a turbocharger rotation speed model representing the above-described governor response, and a combustion chamber model which calculates power generation caused by fuel combustion. For example, calculation is carried out using variables representing the main engine operation state such as the command speed of the main engine 10, a fuel input amount and a fuel consumption amount, the turbocharger rotation speed, exhaust gas pressure and temperature from the combustion chamber. A left side of Fig. 3 shows the main engine 10 to which a propeller 12 is connected through a propeller shaft 11.

To identify a model parameter (coefficient, constant) as the intra-model variable, data which can be collected before a ship goes into service such as a shop trial result of a main engine which is the same type as the main engine 10 is used, or data of initial stage of service is used. In addition, the model parameter is successively changed using a measurement value after service measured by the actual measurement device including the measuring means 10. The successive change of the model parameter using the measurement value after the service measured by the actual measurement device is known also as a digital twin technology.

By successively changing the model parameter using the measurement value after service by the actual measurement device, and by always keeping the prediction precision of the main engine virtual model 40 in the high state, it is possible to monitor with precision comparable to actual measurements even if prediction is carried out by calculation. A GPS (Global Positioning System) for detecting a position related to the ship-operation of a ship, and a Doppler velocimeter for measuring ship speed can be included as the actual measurement device.

As the change of the model parameter, it is predicted that the value of the parameter of the physical model representing the characteristics of the main engine is gradually changed by influence of age deterioration. Therefore, it is predicted that the parameter is changed while targeting data collected during a long period instead of during one to two days. It is regarded that a system identification using Kalman filter or technique to which mechanical learning is applied is used as technology for changing the parameter. When abnormality of the measurement value can be confirmed, only its measurement item is corrected by calculation using a parameter before change, and when all of the measurement items are abnormal, the parameter is not changed, and possible measure should be implemented.

Referring back to Fig. 1, the present embodiment includes display means 61 for displaying the main engine state as the monitoring means 60. A numerical value displayed on the display means 61 can also be displayed digitally.

In this embodiment, the monitoring basically means visual check of online display of a measurement value or a calculation result (main engine state), or automatic saving of data, but the monitoring of the main engine state by the monitoring means 60 includes online display or state observation of the measurement value and the calculation result (main engine state).

The display means 61 is provided in at least one of an engine room, a bridge, a captain's cabin of a ship, and an overland management company. According to this, it is possible to monitor at respective locations where the display means 61 is provided, and to utilize in accordance with a purpose such as determination whether the ship-operation is safe.

The following Table 1 shows items of the main engine state in calculation using the main engine virtual model 40, and its handling. All of the items shown in Table 1 can be targets of online display on the display means 61.

**[Table 1]**

| First input recommended items | Second input recommended items | State predicted items by model calculation |
|---|---|---|
| Command speed of main engine, Actual engine speed, Fuel input amount rack position | Fuel consumption amount, Turbocharger rotation speed, Propeller shaft torque | Main engine output (horsepower), Fuel consumption amount, Turbocharger rotation speed, Pressure in cylinder, Scavenging pressure/ scavenging temperature/ exhaust pressure/ exhaust temperature, Intake air amount, Air excess coefficient, Engine torque |

In Table 1, "First input recommended items" (left column) are information which should be input to carry out the calculation itself of the main engine virtual model 40, and a measurement value related to the operation of the main engine 10 which is set by the operation setting means 20 and a major measurement value of the main engine 10 obtained by the measuring means 30 are used.

It is preferable that a set value related to the operation of the main engine 10 which is set by the operation setting means 20 is the command speed of the main engine 10. It is preferable that the major measurement value of the main engine 10 obtained by the measuring means 30 is speed of the main engine 10 and a fuel supply amount. According to this, it is possible to enhance the prediction precision of the main engine virtual model 40, and to monitor the main engine state more appropriately. In this embodiment, a fuel input amount rack position is used as the fuel supply amount.

The main engine command speed is a value which is set for operating the main engine, and speed (actual rotation speed) of the main engine 10 and the fuel supply amount (fuel input amount rack position) are items which are conventionally monitored using the actual measurement device in general.

In Table 1, even if "second input recommended items" (middle column) is not input, it is possible to carry out the calculation itself by the main engine virtual model 40, but to enhance the calculation precision, and to enhance the update precision of the main engine virtual model 40 by changing a model parameter (coefficient, constant) as the intra-model variable, it is preferable to monitor (measure) using the actual measurement device (measuring means 30).

The second input recommended items in the embodiment are the fuel consumption amount as the fuel supply amount, the turbocharger rotation speed, and the recommended shaft torque.

In Table 1, "state predicted items by model calculation" (right column) are items predicted by calculation of the main engine state by the main engine virtual model 40.

It is preferable that the calculating means 50 calculates, using the main engine virtual model 40, at least one of main engine output (horsepower), fuel consumption amount (Even if it is measured, it may be calculated), turbocharger rotation speed, pressure in cylinder, scavenging pressure, scavenging temperature, exhaust pressure, exhaust temperature, intake air amount, air excess coefficient and main engine torque as the main engine state. According to this, it is possible to more appropriately grasp the main engine state required for monitoring the main engine 10.

The calculating means 50 can also calculate temperature in the combustion chamber or exhaust gas mass as the main engine state using the main engine virtual model 40. Further, the calculating means 50 can also calculate the scavenging mass and exhaust gas mass using respective pressures P, respective temperatures T and respective flow rates V shown in the variable relation diagram of the physical model in Fig. 3.

These calculations are one example calculated in a calculation process of a main engine torque generation model in the physical mathematics model.

When it is possible to calculate these main engine states, calculation using the main engine virtual model 40 is not carried out in some cases, but when precision of a measurement value is doubtful, the main engine state is calculated using the main engine virtual model 40, and prediction is also carried out by means of calculation (including Kalman filter).

As some help to grasp the main engine state, it is preferable to display, on the display means 61, for the main engine torque, the exhaust gas temperature and the air excess coefficient calculated using the main engine virtual model 40, the differences from the standard values of outputs thereof.

The standard value may be a design tolerance value in its output, an average value when a new ship is created, and a value at the time of shop trial operation. The standard value may be a reference value when disturbance acting on the main engine virtual model 40 in its state is set to 0 (zero). Only the air excess coefficient, an absolute value and temporal variation are calculated, tolerance variation caused by the absolute value is determined, and a difference thereof is displayed on the display means 61 as margin.

The display means 61 displays at least one of first monitoring display of the main engine state by the main engine virtual model 40 which does not change the model parameter, second monitoring display of the main engine state by the main engine virtual model 40 which changes and updates the model parameter, and display of a value at the time of maximum continuous rating (MCR) of the main engine 10.

In accordance with a purpose, by displaying the first monitoring display, the second monitoring display or the value display at the time of the maximum continuous rating (MCR) state of the main engine 10, it becomes easy to plan the schedule the safe ship-operation or the energy saving ship-operation of a ship. For example, the first monitoring display can be made as a main engine horsepower of initial service of the ship and the second monitoring display can be made as a main engine horsepower after years are elapsed from the initial service. In this case, by displaying both the first monitoring display and the second monitoring display, it becomes easy to grasp the influence of age deterioration.

To display the information on the display means 61, the display processing means 100 processes display of the first monitoring display, the second monitoring display or the value at the time of the maximum continuous rating (MCR) of the main engine.

Here, the display of the value at the time of the maximum continuous rating (MCR) of the main engine is margin (rate display until the output reaches MCR) for example.

Display selecting means 110 can select whether a set value related to the operation of the main engine 10 and a major measurement value should be displayed on the display means 61. When it is selected to display the set value related to the operation of the main engine 10 and the major measurement value together with the main engine state, it becomes easy to refer also to a value used for the calculation carried out by the main engine virtual model 40 when the monitoring is carried out.

Fig. 4 is a diagram showing an example, on the display means, a display of a statistical analysis result using statistical processing means. A target of the statistical analysis in Fig. 4 is the main engine speed [rpm].

For example, when the monitoring is carried out at sampling frequency as fine as about 10Hz, since it is possible to the same cycle calculate also the main engine state, it is possible to calculate, from a calculation result, a temporal average value, variable amplitude and average cycle of the main engine state which varies on waves by a statistical analysis method using the statistical processing means 80. Not only the stationary component (average value) of the main engine state, but also statistical analysis such as the variable amplitude and the average period are displayed on the display means 61 so that they can be monitored. According to this, it becomes easy to more appropriately check whether the main engine 10 is safely operated.

The statistical analysis value made by the statistical processing means 80 is stored in the storage means 90 in chronological order.

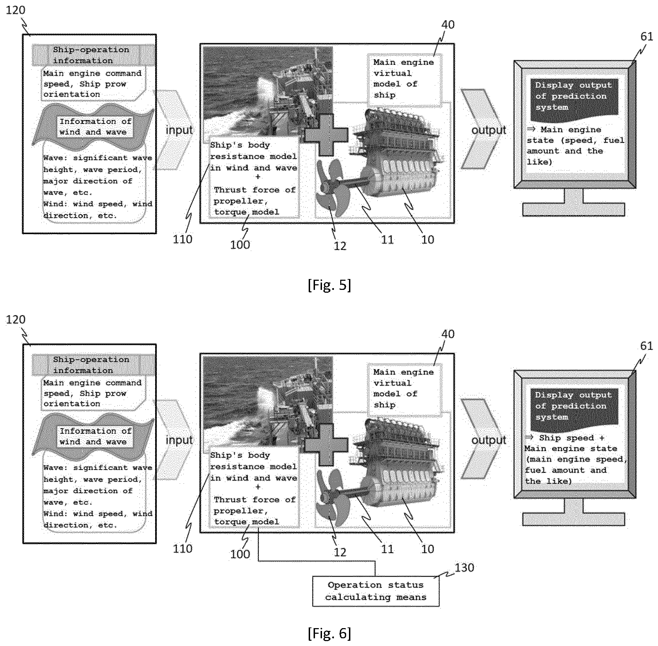

Fig. 5 is a conceptual diagram of the main engine state prediction system of a ship. The same symbols are allocated to the already described constituent elements, and description thereof will be omitted.

The main engine state prediction system of the embodiment further includes a propeller model 100 which models the propeller 12 driven by the main engine 10, a ship's body model 110 of the ship propelled by the propeller 12, and ship-operation condition input means 120 of the ship in the real sea area, to the main engine monitoring system of a ship described above, and the main engine state in the real sea area is predicted. The predicted main engine state is displayed on the display means 61.

The propeller model 100 is a physical mathematics model which calculates propeller torque and a thrust force: by dimensional calculation carried out by density of fluid, the main engine speed, a diameter of the propeller, and propeller thrust force reducing characteristics: by dimensionless single characteristics determined by a blade shape of the propeller: and by dimensionless propeller inflow speed characteristics calculation by interference characteristics between forward moving speed of the ship's body, the main engine speed, interference characteristics between the ship's body and the propeller. This propeller model also calculates variation of the propeller torque and the thrust force by taking influence of waves into consideration of the inflow speed characteristics. The ship's body model 110 is a physical mathematics model representing resistance caused by fluid which acts on the sailing ship's body by plain water resistance, and resistance characteristics increasing characteristics in waves, wind pressure resistance characteristics caused by wind.

As a ship-operation condition in the real sea area which is input using the ship-operation condition input means 120, there are ship-operation information and weather and maritime weather information (wind wave information).

The ship-operation information includes the main engine command speed, ship prow orientation.

The weather and maritime weather information includes significant wave height, average wave cycle, major direction of wave as information related to wave, and information related to wind includes wind speed, wind direction.

The information related to wave is used for calculating torque caused by wave in the propeller model 100 and variation component of thrust force, and for calculating resistance increasing characteristics in wave in the ship's body model 110. The information related to wind is used for calculating the wind pressure resistance characteristics caused by wind in the ship's body model.

As described above, the ship-operation conditions of a ship in the real sea area which is input using the ship-operation condition input means 120 are information which can easily be obtained.

By combining the main engine virtual model 40, the propeller model (propeller thrust force torque model) 100 and the ship's body model (ship's body resistance model in wind wave) 110, it is possible to precisely predict the actual main engine state (main engine rotation number, fuel consumption amount, etc.) in the real sea area under the predicted ship-operation condition, and it is possible to contribute to a safe ship-operation and energy saving ship-operation of the ship.

Further, since the various main engine state parameters are coupled and calculated, the prediction precision of the main engine rotation number is enhanced as compared with the conventional technique.

The main engine state prediction system of a ship can individually be used in the engine room, the bridge, the captain's cabin, the overland management company, and the main engine state prediction systems can arbitrary be combined and used. In this case, the main engine virtual model 40 is made common by communication means, and the main engine virtual model 40 can individually be utilized in accordance with a purpose of a utilization site.

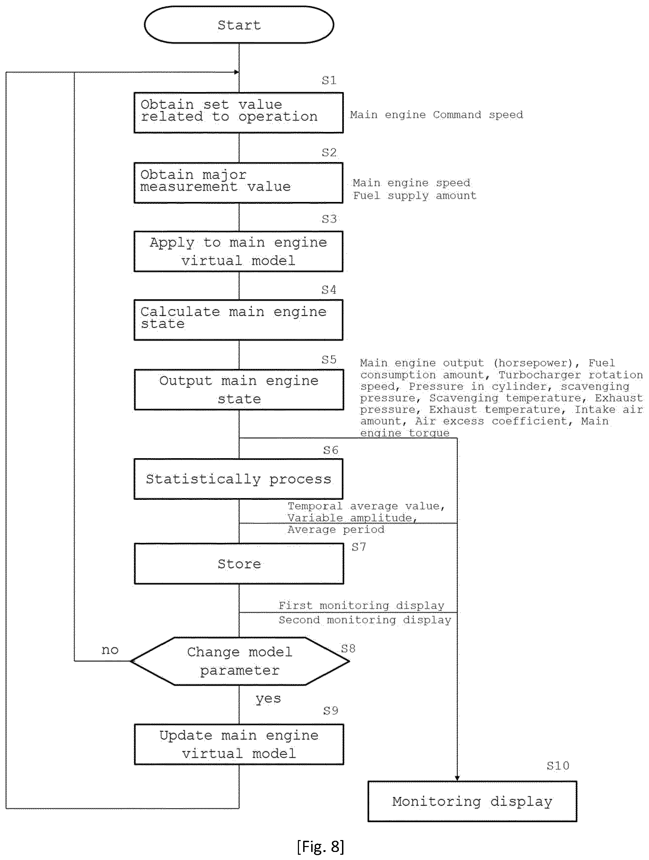

Fig. 8 is a flowchart of the main engine monitoring system of a ship according to the embodiment.

Basically, a control flow can be operated by a computer such as a personal computer and its peripheral devices.

If the power is turned on and a control system is started, a set value related to operation is obtained in step S1. The set value related to operation is the command speed which is set by the operation setting means 20 for example.

Next, in step S2, major measurement values are obtained. The major measurement values are the main engine rotation number and a fuel supply amount measured by the measuring means 30 for example.

Next, in step S3, the obtained set value related to the operation and major measurement value are applied to the main engine virtual model 40 as main engine state parameters. At this time, an initial model parameter is set in the main engine virtual model 40 as the intra-model variable.

Next, in step S4, the main engine state is calculated by the calculating means 50 using the set value and the measurement value which are the main engine state parameters applied to the main engine virtual model.

Next, in step S5, the calculated main engine state is output. Examples of the calculated main engine state are the main engine output (horsepower), fuel consumption amount, turbocharger rotation speed, pressure in cylinder, scavenging pressure, scavenging temperature, exhaust pressure, exhaust temperature, intake air amount, air excess coefficient and main engine torque. These can appropriately be selected, calculated and output at the time of start.

Next, in step S6, these outputs are processed statistically. The statistic process is carried out by the statistical processing means 80. Temporal variations of the above-described output are statistically processed, and these are processed as a temporal average value, variable amplitude within predetermined time range and average period for example.

Next, in step S7, the temporal average value, the variable amplitude and the average period for example as results which are statically processed are stored. This storing operation can be executed by storing these data sets into the storage means 90 but a result of the statistical processing with each repetition of the flow, a calculation result of the main engine state before statistical processing, the model parameter can be stored in the storage means 90.

Next, in step S8, it is determined whether the model parameter should be changed. When the model parameter is considering changed, it is determined whether the parameter should be changed based on a predetermined condition such as a threshold value targeted at data sets collected for some amount of time.

When change is unnecessary based on the predetermined condition, the procedure is returned to step S1, and the flow of monitoring of the main engine state is repeated thereafter.

Next, when change is necessary, the model parameter is changed and the main engine virtual model 40 is updated in step S9. When the model parameter of the main engine virtual model 40 is changed, the flow of the monitoring of the main engine state after step S1 is repeated until next update.

In step S10, the monitoring display is carried out. The monitoring display for example is carried out by displaying the information on the display means 61 of the monitoring means 60 through the display processing means 100. This monitoring display can display for example main engine output (horsepower), fuel consumption amount, turbocharger rotation speed, pressure in cylinder, scavenging pressure, scavenging temperature, exhaust pressure, exhaust temperature, intake air amount, air excess coefficient and main engine torque after step S5. After step S6, it is also possible to display for example the temporal average value, variable amplitude within the predetermined time range and average period as a result of statistical processing of output of the main engine state. Further, after step S7, it is also possible to carry out the first monitoring display by the stored initial model parameter and the second monitoring display by the changed model parameter.

Concerning the display, it is possible to display all of targets which can be displayed, such as a set value related to the operation carried out by the operation setting means 20, and a major measurement value obtained by the measuring means 30.

Fig. 6 is a conceptual diagram of the operation status prediction system of a ship. The same symbols are allocated to the already described constituent elements, and description thereof will be omitted.

The operation status prediction system of the ship according to the embodiment further includes the propeller model (thrust force of propeller, torque model) 100 which models the propeller 12 driven by the main engine 10, the ship's body model (ship's body resistance model in wind and wave) 110 of the ship propelled by the propeller 12, the ship-operation condition input means 120 of the ship in the real sea area and operation status calculating means 130 of the ship, to the main engine monitoring system of a ship described above, and the operation status in the real sea area is predicted. The predicted operation status is displayed on the display means 61.

The operation status calculating means 130 of the ship predicts ship speed and fuel consumption amount as the operation status in the real sea area. As described above, by combining the main engine virtual model 40, the propeller model (thrust force of propeller, torque model) 100 and the ship's body model (ship's body resistance model in wind and wave) 110, various main engine state parameters are coupled and calculated. Therefore, the prediction precision of the main engine rotation number is enhanced as compared with the conventional technique. The enhancement of the prediction precision of the main engine rotation number leads to precise prediction of the thrust force of the propeller. Therefore, ship speed can be predicted more precisely than the conventional technique. According to this, it is possible to precisely predict an actual operation status of a ship in the real sea area under assumed ship-operation condition, and to contribute to safe ship-operation and energy saving ship-operation of a ship.

The operation status prediction system of a ship can individually be used in an engine room, a bridge, a captain's cabin and an overland management company. In this case, the main engine virtual model 40 is communalized by communication means, and the main engine virtual model 40 can individually be utilized in accordance with a purpose of a utilization site.

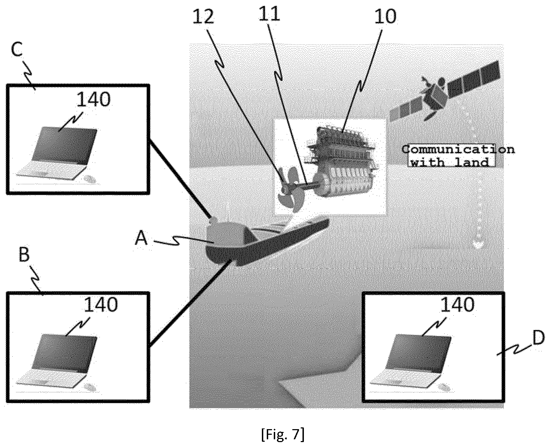

Fig. 7 is a usage image diagram of the main engine monitoring system and the operation status prediction system of a ship.

In a ship A, calculation is carried out using the main engine virtual model 40, and the main engine state of the main engine 10 is monitored. A propeller 12 is connected to the main engine 10 through a propeller shaft 11.

The operation status prediction system can be utilized in an engine room B, an bridge C and an overland management company D, using an arithmetic unit 140 such as a placed personal computer. The overland management company D is a company which manages ship-operation of a ship, or a company which manages maintenance of a ship.

In the main engine virtual model 40, model parameters are successively changed by a main engine state parameter or a main engine state as a calculation result, but the main engine virtual model 40 is shared in the ship to utilize in the engine room B and the bridge C, and the main engine virtual model 40 is shared also in the overland management company D by the communication means such as satellite communication. Hence, the main engine virtual model 40 (main engine characteristics) used for prediction is the same regardless of places, and it is possible to individually predict ship speed or a main engine state under an assumed operation condition while always taking the latest main engine characteristics into consideration. Therefore, it is possible to utilize the prediction function precisely in accordance with a purpose, for example, information for future effective operation is collected in the overland management company D, and danger avoidance caused by prediction of the main engine state in encountered maritime weather is conducted in the engine room B.

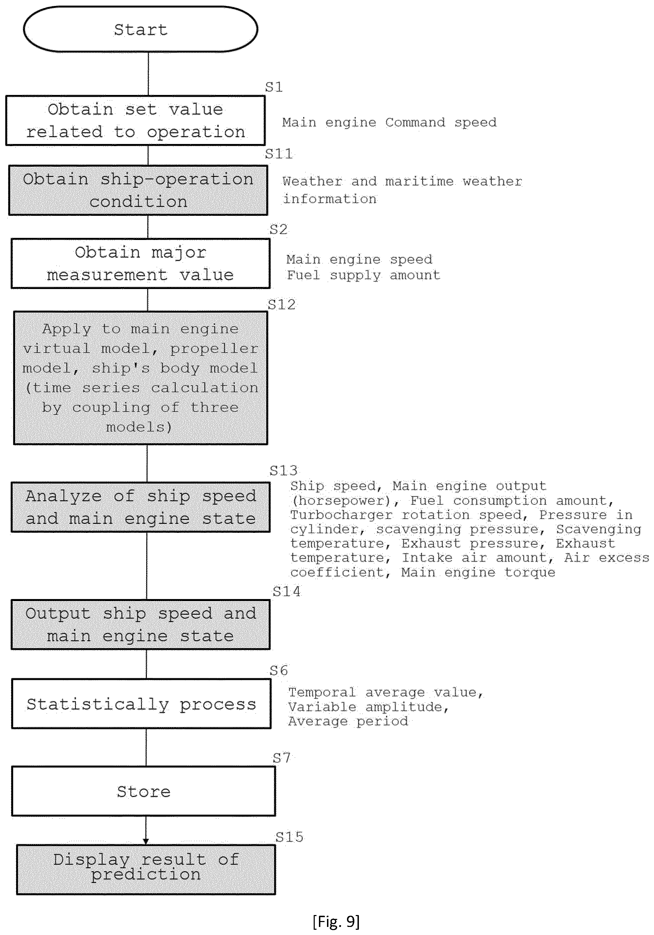

Fig. 9 is a flowchart of the operation condition prediction system of a ship according to the embodiment.

The same symbols are basically allocated to contents having the same functions as the control flow in Fig. 8, and detailed description thereof will be omitted. Focusing on prediction of the operation condition, details of update of the main engine virtual model and monitoring display as flowchart are omitted.

Ship-operation conditions of a ship are obtained in step S11. The ship-operation conditions are weather and maritime weather information which is input by the ship-operation condition input means 120 of a ship. Since the ship-operation condition input means 120 of a ship in Fig. 6 is also provided with functions corresponding to the operation setting means 20 and the measuring means 30, it is also possible to obtain ship prow orientation as a set value, ship prow orientation as a measurement value, weather and maritime weather information which can be measured in a ship.

In step S12, the set value related to operation obtained in step S1, the ship-operation condition obtained in step S11, and the major measurement value obtained in step S2 are applied to the main engine virtual model 40, the propeller model (thrust force of propeller, torque model 100), and the ship's body model (ship's body resistance model 110 in wind and wave). Here, it is possible to carry out time series calculation by coupling of the three models.

Next, ship speed and the main engine state are analyzed in step S13. In step S13, the ship speed and the like are analyzed as items related to the ship-operation of a ship in addition to calculation of the main engine state which is carried out in step S5.

Nest, the ship speed and the main engine state which are calculated and analyzed are output in step S14.

The calculation and a result of the analysis of the ship speed and the main engine state are statistically processed in step S6, they are stored in step S7, and a result of prediction is displayed in step S15.

The result of prediction is displayed on the display means 61 in step S15. According to this, they can be utilized in accordance with a purpose such as determination of the safe ship-operation, and prediction of future ship speed or the main engine state.

As described above, the set value and the major measurement value related to the operation of the main engine 10 which is the main engine state parameter as the intra-model variable are applied to the main engine virtual model 40 made of a combination of physical models representing a response per the constituent element of the main engine 10 of the ship A, calculation is carried out by the main engine virtual model 40, and the main engine state of the main engine 10 is monitored, the model parameter is changed using at least one of the main engine state parameter and the main engine states as a calculation result, and the main engine virtual model 40 is updated. According to this, the main engine state is calculated using the main engine virtual model 40 which is composed of the physical model base, and the main engine state corresponding to the ship operation status is obtained as a variable at the time of calculation. Therefore, it is possible to monitor the main engine state based on the calculation result without requiring the actual measurement device so much. By successively changing the intra-model variable and always keeping the prediction precision of the main engine virtual model 40 in the high state, it is possible to monitor with precision comparable to actual measurements.

The command speed of the main engine 10 is used as the set value related to the actual operation of the main engine 10, and speed of the main engine 10 and the fuel supply amount of the main engine 10 are used as the major measurement values. According to this, it is possible to enhance the prediction precision of the main engine virtual model 40 and to monitor the main engine state more appropriately.

The main engine state calculated by the main engine virtual model 40 includes at least one of main engine output (horsepower), fuel consumption amount, turbocharger rotation speed, pressure in cylinder, scavenging pressure, scavenging temperature, exhaust pressure, exhaust temperature, intake air amount, air excess coefficient and main engine torque. According to this, it is possible to more appropriately grasp the main engine state required for monitoring the main engine 10.

By evaluating at least one of temporal average value, the variable amplitude and the average period of the main engine state, and by carrying out the monitoring, it becomes easy to more appropriately check whether the main engine 10 is safely operated.

By predicting the main engine state in the real sea area or the operation status of the ship A using the propeller model which models the propeller 12 driven by the main engine 10 and by the ship's body model of the ship A which is propelled by the propeller 12, it is possible to contribute to the safe ship-operation of the ship A and the energy saving ship-operation.

Further, by displaying the main engine state for monitoring on at least one of the engine room B, the bridge C, the captain's cabin of the ship A, and the overland management company D, it is possible to carry out the monitoring at respective locations where the main engine state is displayed, and it is possible to utilize in accordance with a purpose, for example, the safe ship-operation is determined, and future ship speed or the main engine state is predicted. The main engine state to be monitored includes, in addition to the main engine state as a result of calculation by the main engine virtual model 40, a secondary calculation result based on the main engine state as a result, related information for calculating the main engine state, and determination information of a person based on the main engine state as a result.

Concerning the display of the main engine state for monitoring, by displaying at least one of the first monitoring display of the main engine state by the main engine virtual model 40 which does not change the model parameter, the second monitoring display of the main engine state by the main engine virtual model 40 which changes and updates the model parameter, and the display of the value at the time of the maximum continuous rating (MCR) state of the main engine 10, by displaying the first monitoring display, the second monitoring display or the value display at the time of the maximum continuous rating (MCR) state of the main engine 10 in accordance with a purpose, it becomes easy to plan the schedule the safe ship-operation or the energy saving ship-operation of the ship A. For example, the first monitoring display can be made as a main engine state of initial service of the ship, and the second monitoring display can be made as a main engine state after years are elapsed from the initial service. In this case, by displaying both the first monitoring display and the second monitoring display, it becomes easy to grasp influence of age deterioration.

Further, at least one of the plurality of main engine state parameters can be displayed by selection. According to this, the main engine state parameter is displayed together with the main engine state, when the monitoring is carried out, it becomes easy to refer also to the major measurement value and the set value related to the operation of the main engine 10 used for calculation made by the main engine virtual model 40.

The above-described description is for describing the typical embodiment made by the present disclosure, and the invention should not be limited to the description. The present disclosure may be carried out in a mode different from the mode which is expressly described in the present specification, and various corrections, optimizations and modifications can be made by a person skilled in the art within a scope which conforms with the claims.

### [INDUSTRIAL APPLICABILITY]

According to the present invention, it is possible to monitor the main engine state using the main engine virtual model in which digital twin technology is utilized. Therefore, it is possible to reduce the installation cost of the actual measurement device and to efficiently manage the maintenance of the main engine. Further, since it is possible to precisely predict the main engine operation state and the ship operation status such as ship speed under assumed weather and maritime weather, it is possible to contribute to enhancement of the monitoring technique of the main engine of a ship and maintenance management technique, and contribute to assistance of the ship-operation management.

### [EXPLANATION OF SYMBOLS]

- 10: main engine
- 12: propeller
- 20: operation setting means
- 30: measuring means
- 40: main engine virtual model
- 50: calculating means
- 60: monitoring means
- 61: display means
- 70: intra-model variable updating means
- 80: statistical processing means
- 100: display processing means
- 110: display selecting means
- 120: ship-operation condition input means
- A: ship
- B: engine room
- C: bridge
- D: overland management company

## Claims

1. A main engine monitoring method of a ship wherein a set value and a major measurement value related to operation of a main engine which is a main engine state parameter as an intra-model variable are applied to a main engine virtual model made of a combination of physical models each representing a response per a constituent element of a main engine of the ship, calculation is carried out by the main engine virtual model and a main engine state of the main engine is monitored, a model parameter as the intra-model variable is changed using at least one of the main engine state parameter and the main engine state as a calculation result, and the main engine virtual model is updated.

2. The main engine monitoring method of a ship according to claim 1, wherein command speed of the main engine is used as the set value related to the operation of the actual main engine, and the main engine speed and a fuel supply amount are used as the major measurement value.

3. The main engine monitoring method of a ship according to claim 1 or 2, wherein the main engine state which carries out calculation by the main engine virtual model includes at least one of main engine output (horsepower), a fuel consumption amount, turbocharger number of rotations, pressure in a cylinder, scavenging pressure, scavenging temperature, exhaust pressure, exhaust temperature, an intake air amount, an air excess coefficient and main engine torque.

4. The main engine monitoring method of a ship according to any one of claims 1 to 3, wherein at least one of a temporal average value, variable amplitude and an average period of the main engine state is evaluated, and the monitoring is carried out.

5. The main engine monitoring method of a ship according to any one of claims 1 to 4, wherein the main engine state in the real sea area or an operation status of the ship is predicted using a propeller model which models a propeller driven by the main engine and a ship's body model of the ship which is propelled by a propeller.

6. The main engine monitoring method of a ship according to any one of claims 1 to 5, wherein the main engine state for monitoring is displayed on at least one of an engine room, a bridge, a captain's cabin of the ship and an overland management company.

7. The main engine monitoring method of a ship according to claim 6, wherein display of the main engine state for monitoring displays at least one of first monitoring display of the main engine state by the main engine virtual model which does not change the model parameter, second monitoring display of the main engine state by the main engine virtual model which changes and updates the model parameter, and display of a value at time of maximum continuous rating (MCR) of the main engine.

8. The main engine monitoring method of a ship according to claim 6 or 7, wherein at least one of a plurality of the main engine state parameters can be displayed by selection.

9. A main engine monitoring system of a ship comprising: a main engine of the ship; operation setting means for setting a set value related to operation of the main engine; measuring means for obtaining a major measurement value of the main engine; a main engine virtual model made of a combination of physical models each representing a response per a constituent element of the main engine; calculating means for applying the set value and the measurement value which are main engine state parameters as intra-model variables to the main engine virtual model, and for calculating a main engine state; monitoring means for monitoring the main engine state based on a result of the calculation of the calculating means; and intra-model variable updating means for changing a model parameter as the intra-model variable using at least one of the main engine state parameter and the main engine state as the result of the calculation, and for updating the main engine virtual model.

10. The main engine monitoring system of a ship according to claim 9, wherein the set value related to the operation which is set by the operation setting means is command speed of the main engine, and the major measurement value which is measured by the measuring means is the main engine speed and a fuel supply amount.

11. The main engine monitoring system of a ship according to claim 9 or 10, wherein the calculating means calculates, using the main engine virtual model at least one of main engine output (horsepower), a fuel consumption amount, turbocharger rotation speed, pressure in a cylinder, scavenging pressure, scavenging temperature, exhaust pressure, exhaust temperature, an intake air amount, an air excess coefficient and main engine torque as the main engine state.

12. The main engine monitoring system of a ship according to any one of claims 9 to 11, further comprising statistical processing means for evaluating at least one of temporal average value, variable amplitude and an average period of the main engine state, and for carrying out the monitoring.

13. The main engine monitoring system of a ship according to any one of claims 9 to 12, wherein at least one of an engine room, a bridge, a captain's cabin of the ship, and an overland management company includes display means which displays the main engine state as the monitoring means.

14. The main engine monitoring system of a ship according to claim 13, further comprising display processing means which processes, for displaying the main engine state on the display means, at least one of first monitoring display of the main engine state by the main engine virtual model which does not change the model parameter, second monitoring display of the main engine state by the main engine virtual model which changes and updates the model parameter, and display of a value at the time of maximum continuous rating (MCR) of the main engine.

15. The main engine monitoring system of a ship according to claim 13 or 14, wherein the display means includes display selecting means for selecting display of the set value related to the operation of the main engine and display of the major measurement value.

16. A main engine state prediction system of a ship, wherein the main engine monitoring system of a ship according to any one of claims 9 to 15 further comprises a propeller model which models a propeller driven by the main engine, a ship's body model of the ship propelled by the propeller, and ship-operation condition input means of the ship in a real sea area, and the main engine state in the real sea area is predicted.

17. An operation status prediction system of a ship, wherein the main engine monitoring system of a ship according to any one of claims 9 to 15 further comprises a propeller model which models a propeller driven by the main engine, a ship's body model of the ship propelled by the propeller, and ship-operation condition input means of the ship in a real sea area, and operation status calculating means of the ship, and operation status of the ship in the real sea area is predicted.
